# EUROPEAN PATENT APPLICATION

(11) **EP 4 387 299 A1**
(43) Date of publication of application: **19.06.2024**
(21) Application number: 22871816.9
(22) Date of filing: 08.09.2022
(51) Int. Cl.: H04W 8/24

(54) **COMMUNICATION METHOD AND RELATED APPARATUS**

(30) Priority: 23.09.2021 CN 202111114235
(71) Applicant: Huawei Technologies Co., Ltd., Shenzhen, Guangdong 518129 (CN)
(72) Inventor: XU, Bin, Shenzhen, Guangdong 518129 (CN); CHEN, Lei, Shenzhen, Guangdong 518129 (CN); LI, Chenwan, Shenzhen, Guangdong 518129 (CN); LI, Bingzhao, Shenzhen, Guangdong 518129 (CN)
(74) Representative: Körber, Martin Hans
(86) International application number: PCT/CN2022/117745
(87) International publication number: WO 2023/045768

(57) **Abstract**

This application provides a communication method and a related apparatus. In the technical solutions of this application, an access network device receives first information, where the first information includes information about a first terminal device. The access network device determines, based on the first information, that there is a first association relationship between the first terminal device and a second terminal device. In the communication method in this application, the access network device determines an association relationship between terminal devices based on information reported by the terminal device, and then the access network device sends related configuration information to the terminal device based on the association relationship between the terminal devices, and provides a more effective coordinated transmission service for the terminal device.

## Description

This application claims priority to Chinese Patent Application No. 202111114235.X, filed with the China National Intellectual Property Administration on September 23, 2021 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

In some wireless communication scenarios, a plurality of user terminal devices (user equipments, UEs) need to cooperate to perform data communication with a base station (an access network device). For example, an uplink rate is improved through terminal device aggregation transmission, or service reliability is improved through terminal device backup transmission. In these scenarios, the base station needs to schedule data for the terminal devices based on an association relationship between the plurality of terminal devices. Currently, there is no determined solution for establishing and maintaining the association relationship between the plurality of UEs.

Therefore, how to determine the association relationship between the UEs becomes a technical problem to be urgently resolved.

### SUMMARY

This application provides a communication method and a related apparatus. In the technical solutions of this application, an access network device determines an association relationship between terminal devices based on information reported by the terminal device, and then provides a more effective coordinated transmission service for the terminal device based on the association relationship.

According to a first aspect, this application provides a communication method. The method includes: An access network device receives first information, where the first information includes information about a first terminal device. The access network device determines, based on the first information, that there is a first association relationship between the first terminal device and a second terminal device.

In the method, the access network device determines, based on the first information, that there is the first association relationship between the first terminal device and the second terminal device, and the access network device provides a more effective coordinated transmission service for the terminal devices based on the first association relationship.

With reference to the first aspect, in a possible implementation, the first information includes at least one of the following information: location information of the first terminal device, an identifier of the first terminal device, a group identifier of the first terminal device, a service identifier of the first terminal device, an address of a first device connected to the first terminal device, an identifier of the first device, and a first application layer identifier.

In this implementation, specific information of the first terminal device that is included in the first information is described in detail, so that the access network device better establishes an association relationship between the first terminal device and the second terminal device.

With reference to the first aspect, in a possible implementation, the method further includes: The access network device receives second information, where the second information includes at least one of the following information: location information of the second terminal device, an identifier of the second terminal device, a group identifier of the second terminal device, a service identifier of the second terminal device, an address of a second device connected to the second terminal device, an identifier of the second device, and a second application layer identifier. That the access network device determines, based on the first information, that there is a first association relationship between the first terminal device and a second terminal device includes: The access network device determines the first association relationship between the first terminal device and the second terminal device based on the first information and the second information.

In this implementation, content included in the second information is described, so that the access network device establishes the association relationship between the first terminal device and the second terminal device based on the first information and the second information.

With reference to the first aspect, in a possible implementation, that the access network device determines the first association relationship between the first terminal device and the second terminal device based on the first information and the second information includes: If the first information and the second information meet a first condition, the access network device determines the first association relationship between the first terminal device and the second terminal device. The first condition includes at least one of the following conditions: A distance between a location of the first terminal device and a location of the second terminal device is less than a first preset threshold, the identifier of the first terminal device is the same as the identifier of the second terminal device, the group identifier of the first terminal device is the same as the group identifier of the second terminal device, the service identifier of the first terminal device is the same as the service identifier of the second terminal device, the address of the first device connected to the first terminal device is the same as the address of the second device connected to the second terminal device, the identifier of the first device is the same as the identifier of second device, and the first application layer identifier is the same as the second application layer identifier.

In this implementation, when the first information and the second information meet the first condition, the access network device determines the first association relationship between the first terminal device and the second terminal device based on the first information and the second information. This is described in detail, so that the access network device provides the more effective coordinated transmission service for the terminal device.

With reference to the first aspect, in a possible implementation, the method further includes: The access network device sends third information to the first terminal device, where the third information is used to acknowledge the first information; or the access network device sends fourth information to the second terminal device, where the fourth information is used to acknowledge the second information.

In this implementation, the access network device sends acknowledgment information to the first terminal device and the second terminal device, to acknowledge the first information sent by the first terminal device and the second information sent by the second terminal device.

With reference to the first aspect, in a possible implementation, the third information or the fourth information includes at least one of the following information: an identifier of the first association relationship, primary terminal device indication information, secondary terminal device indication information, and an identifier of a first group. The primary terminal device indication information indicates that the first terminal device is a primary terminal device in the first terminal device and the second terminal device, the secondary terminal device indication information indicates that the second terminal device is a secondary terminal device in the first terminal device and the second terminal device, and the first group includes the first terminal device and the second terminal device.

In this implementation, content included in the third information and the fourth information is specifically described, and specific information of the first terminal device and the second terminal device is further indicated.

With reference to the first aspect, in a possible implementation, the method further includes: The access network device receives fifth information, where the fifth information includes at least one of the following information: location information of a third terminal device, a third identifier of the third terminal device, a group identifier of the third terminal device, a service identifier of the third terminal device, an address of a third device connected to the third terminal device, an identifier of the third device, and a third application layer identifier. The access network device determines a second association relationship between the first terminal device and the third terminal device based on the first information and the fifth information.

In this implementation, the access network device receives the fifth information, and determines the second association relationship between the first terminal device and the third terminal device, so that the access network device updates stored information in a timely manner.

With reference to the first aspect, in a possible implementation, that the access network device determines a second association relationship between the first terminal device and the third terminal device based on the first information and the fifth information includes: If the first information and the fifth information meet a second condition, the access network device determines the second association relationship between the first terminal device and the third terminal device. The second condition includes at least one of the following conditions: A distance between the location of the first terminal device and a location of the third terminal device is less than a second preset threshold, the identifier of the first terminal device is the same as the third identifier of the third terminal device, the group identifier of the first terminal device is the same as the group identifier of the third terminal device, the service identifier of the first terminal device is the same as the service identifier of the third terminal device, the address of the first device connected to the first terminal device is the same as the address of the third device connected to the third terminal device, the identifier of the first device is the same as the identifier of third device, and the first application layer identifier is the same as the third application layer identifier. The access network device updates the first association relationship to the second association relationship.

In this implementation, when the first information and the fifth information meet the second condition, the access network device determines the second association relationship between the first terminal device and the third terminal device based on the first information and the fifth information, and updates the first association relationship to the second association relationship. This is described in detail, so that the access network device provides the more effective coordinated transmission service for the terminal device.

With reference to the first aspect, in a possible implementation, the method further includes: The access network device receives sixth information sent by the first terminal device, where the sixth information indicates to enable terminal device coordinated transmission, and the terminal device coordinated transmission means that at least two terminal devices that have an association relationship perform aggregation transmission or backup transmission with the access network device. The access network device determines, based on the first association relationship, the second terminal device that has the association relationship with the first terminal device.

In this implementation, the terminal device sends information to the access network device based on a service status, to indicate to enable the terminal device coordinated transmission, and then the second terminal device that has the association relationship with the first terminal device is determined based on the first association relationship, so that a data communication service is provided for the terminal device.

With reference to the first aspect, in a possible implementation, the sixth information includes the first information or the identifier of the first association relationship.

In this implementation, specific content included in the sixth information is described, so that the access network device determines, based on the first association relationship, the second terminal device that has the association relationship with the first terminal device.

According to a second aspect, this application provides a communication method. The method includes: A terminal device determines first information, where the first information includes at least one of the following information: location information of the terminal device, an identifier of the terminal device, a group identifier of the terminal device, a service identifier of the terminal device, an address of a first device connected to the terminal device, an identifier of the first device, and a first application layer identifier. The terminal device sends the first information to an access network device.

In the method, the terminal device determines the first information, and sends the first information to the access network device, so that the access network device determines an association relationship between terminal devices based on the first information of the terminal device.

With reference to the second aspect, in a possible implementation, the method further includes: The terminal device receives first indication information sent by the access network device, where the first indication information indicates that the terminal device is a primary terminal device.

With reference to the second aspect, in a possible implementation, the method further includes: The terminal device determines, based on quality of service QoS of a service, that terminal device coordinated transmission needs to be enabled, and includes second indication information in a radio resource control RRC connection setup request sent by the terminal device to the access network device, where the second indication information indicates to enable the terminal device coordinated transmission.

In this implementation, the terminal device determines that the terminal device coordinated transmission needs to be enabled, and sends indication information to the access network device, to indicate to enable the terminal device coordinated transmission. Further, the access network device provides a more effective coordinated transmission service for the terminal device based on the stored association relationship between the terminal devices.

According to a third aspect, this application provides a communication method. The method includes: A first access network device sends a handover request to a second access network device, where the handover request indicates an association relationship between terminal devices, and the handover request includes at least one of the following information: identifiers of the terminal devices, an association indication for the terminal devices, and an association identifier for the terminal devices.

In the method, the first access network device sends the handover request to the second access network device, where the handover request includes the association relationship between the terminal devices. In this way, the second access network device can learn of the association relationship between the terminal devices in advance, and provide a more effective coordinated transmission service for the terminal device. In addition, in a handover process, the second access network device does not need to establish the association relationship between the terminal devices based on another procedure, so that resource overheads can be reduced.

According to a fourth aspect, this application provides a communication method. The method includes: A second access network device receives a handover request sent by a first access network device, where the handover request indicates an association relationship between terminal devices, and the handover request includes at least one of the following information: identifiers of the terminal devices, an association indication for the terminal devices, and an association identifier for the terminal devices.

In the method, the second access network device receives the handover request sent by the first access network device, where the handover request includes the association relationship between the terminal devices. In this way, the second access network device can learn of the association relationship between the terminal devices in advance, and provide a more effective coordinated transmission service for the terminal device. In addition, in a handover process, the second access network device does not need to establish the association relationship between the terminal devices based on another procedure, so that resource overheads can be reduced.

With reference to the fourth aspect, in a possible implementation, the handover request further includes bearer identifiers of the terminal devices.

In this implementation, the handover request may further include the bearer identifiers of the terminal devices, to further indicate specific radio bearers that are of different terminal devices and that are associated with each other.

According to a fifth aspect, this application provides a communication apparatus. The apparatus includes: a receiving module, used by an access network device to receive first information, where the first information includes information about a first terminal device; and a determining module, used by the access network device to determine, based on the first information, that there is a first association relationship between the first terminal device and a second terminal device.

With reference to the fifth aspect, in a possible implementation, the first information includes at least one of the following information: location information of the first terminal device, an identifier of the first terminal device, a group identifier of the first terminal device, a service identifier of the first terminal device, an address of a first device connected to the first terminal device, an identifier of the first device, and a first application layer identifier.

With reference to the fifth aspect, in a possible implementation, the receiving module is further used by the access network device to receive second information, where the second information includes at least one of the following information: location information of the second terminal device, an identifier of the second terminal device, a group identifier of the second terminal device, a service identifier of the second terminal device, an address of a second device connected to the second terminal device, an identifier of the second device, and a second application layer identifier. The determining module is further used by the access network device to determine the first association relationship between the first terminal device and the second terminal device based on the first information and the second information.

With reference to the fifth aspect, in a possible implementation, the determining module is specifically used by the access network device to: if the first information and the second information meet a first condition, determine the first association relationship between the first terminal device and the second terminal device. The first condition includes at least one of the following conditions: A distance between a location of the first terminal device and a location of the second terminal device is less than a first preset threshold, the identifier of the first terminal device is the same as the identifier of the second terminal device, the group identifier of the first terminal device is the same as the group identifier of the second terminal device, the service identifier of the first terminal device is the same as the service identifier of the second terminal device, the address of the first device connected to the first terminal device is the same as the address of the second device connected to the second terminal device, the identifier of the first device is the same as the identifier of second device, and the first application layer identifier is the same as the second application layer identifier.

With reference to the fifth aspect, in a possible implementation, the apparatus further includes a sending module. The sending module is used by the access network device to send third information to the first terminal device, where the third information is used to acknowledge the first information; or used by the access network device to send fourth information to the second terminal device, where the fourth information is used to acknowledge the second information.

With reference to the fifth aspect, in a possible implementation, the third information or the fourth information includes at least one of the following information: an identifier of the first association relationship, primary terminal device indication information, secondary terminal device indication information, and an identifier of a first group. The primary terminal device indication information indicates that the first terminal device is a primary terminal device in the first terminal device and the second terminal device, the secondary terminal device indication information indicates that the second terminal device is a secondary terminal device in the first terminal device and the second terminal device, and the first group includes the first terminal device and the second terminal device.

With reference to the fifth aspect, in a possible implementation, the receiving module is further used by the access network device to receive fifth information, where the fifth information includes at least one of the following information: location information of a third terminal device, a third identifier of the third terminal device, a group identifier of the third terminal device, a service identifier of the third terminal device, an address of a third device connected to the third terminal device, an identifier of the third device, and a third application layer identifier. The determining module is further used by the access network device to determine a second association relationship between the first terminal device and the third terminal device based on the first information and the fifth information.

With reference to the fifth aspect, in a possible implementation, the apparatus further includes an update module. The determining module is specifically used by the access network device to: if the first information and the fifth information meet a second condition, determine the second association relationship between the first terminal device and the third terminal device. The second condition includes at least one of the following conditions: A distance between the location of the first terminal device and a location of the third terminal device is less than a second preset threshold, the identifier of the first terminal device is the same as the third identifier of the third terminal device, the group identifier of the first terminal device is the same as the group identifier of the third terminal device, the service identifier of the first terminal device is the same as the service identifier of the third terminal device, the address of the first device connected to the first terminal device is the same as the address of the third device connected to the third terminal device, the identifier of the first device is the same as the identifier of third device, and the first application layer identifier is the same as the third application layer identifier. The update module is used by the access network device to update the first association relationship to the second association relationship.

With reference to the fifth aspect, in a possible implementation, the receiving module is further used by the access network device to receive sixth information sent by the first terminal device, where the sixth information indicates to enable terminal device coordinated transmission, and the terminal device coordinated transmission means that at least two terminal devices that have an association relationship perform aggregation transmission or backup transmission with the access network device. The determining module is further used by the access network device to determine, based on the first association relationship, the second terminal device that has the association relationship with the first terminal device.

With reference to the fifth aspect, in a possible implementation, the sixth information includes the first information or the identifier of the first association relationship.

According to a sixth aspect, this application provides a communication apparatus. The apparatus includes: a determining module, used by a terminal device to determine first information, where the first information includes at least one of the following information: location information of the terminal device, an identifier of the terminal device, a group identifier of the terminal device, a service identifier of the terminal device, an address of a first device connected to the terminal device, an identifier of the first device, and a first application layer identifier; and a sending module, used by the terminal device to send the first information to an access network device.

With reference to the sixth aspect, in a possible implementation, the apparatus further includes a receiving module. The receiving module is used by the terminal device to receive first indication information sent by the access network device, where the first indication information indicates that the terminal device is a primary terminal device.

With reference to the sixth aspect, in a possible implementation, the apparatus further includes a judging module. The judging module is used by the terminal device to: determine, based on quality of service QoS of a service, that terminal device coordinated transmission needs to be enabled, and include second indication information in a radio resource control RRC connection setup request sent by the terminal device to the access network device, where the second indication information indicates to enable the terminal device coordinated transmission.

According to a seventh aspect, this application provides a communication apparatus. The apparatus includes a sending module, used by a first access network device to send a handover request to a second access network device, where the handover request indicates an association relationship between terminal devices, and the handover request includes at least one of the following information: identifiers of the terminal devices, an association indication for the terminal devices, and an association identifier for the terminal devices.

According to an eighth aspect, this application provides a communication apparatus. The apparatus includes a receiving module, used by a second access network device to receive a handover request sent by a first access network device, where the handover request indicates an association relationship between terminal devices, and the handover request includes at least one of the following information: identifiers of the terminal devices, an association indication for the terminal devices, and an association identifier for the terminal devices.

With reference to the eighth aspect, in a possible implementation, the handover request further includes bearer identifiers of the terminal devices.

According to a ninth aspect, an embodiment of this application provides a communication apparatus. The communication apparatus includes at least one processor and a memory, the processor is coupled to the memory, the memory stores program instructions, and when the program instructions stored in the memory are executed by the processor, the communication apparatus is enabled to perform the method in any one of the first aspect to the eighth aspect or the possible implementations of the first aspect to the eighth aspect.

According to a tenth aspect, an embodiment of this application provides a computer-readable storage medium. The computer-readable storage medium is configured to store program instructions executed by a computer, and the program instructions include instructions used to perform the method in any one of the first aspect to the eighth aspect or the possible implementations of the first aspect to the eighth aspect.

According to an eleventh aspect, an embodiment of this application provides a computer program product. The computer program product includes computer program instructions, and when the computer program instructions are run on a computer, the computer is enabled to implement the method in any one of the first aspect to the eighth aspect or the possible implementations of the first aspect to the eighth aspect.

### BRIEF DESCRIPTION OF DRAWINGS

FIG. 1 is a schematic diagram of an architecture of a mobile communication system according to an embodiment of this application;
FIG. 2 is a schematic diagram of an example of a communication system according to an embodiment of this application;
FIG. 3 is a schematic diagram of communication performed via two UEs in a conventional technology according to an embodiment of this application;
FIG. 4 is a schematic diagram of an example network architecture according to an embodiment of this application;
FIG. 5 is a schematic flowchart of a communication method according to an embodiment of this application;
FIG. 6 is a conventional handover flowchart of an access network device according to an embodiment of this application;
FIG. 7 is a schematic diagram of a structure of a communication apparatus according to an embodiment of this application;
FIG. 8 is a schematic diagram of a structure of a communication apparatus according to another embodiment of this application;
FIG. 9 is a schematic diagram of a structure of a communication apparatus according to still another embodiment of this application;
FIG. 10 is a schematic diagram of a structure of a communication apparatus according to still another embodiment of this application; and
FIG. 11 is a schematic diagram of a structure of a communication apparatus according to still another embodiment of this application.

### DESCRIPTION OF EMBODIMENTS

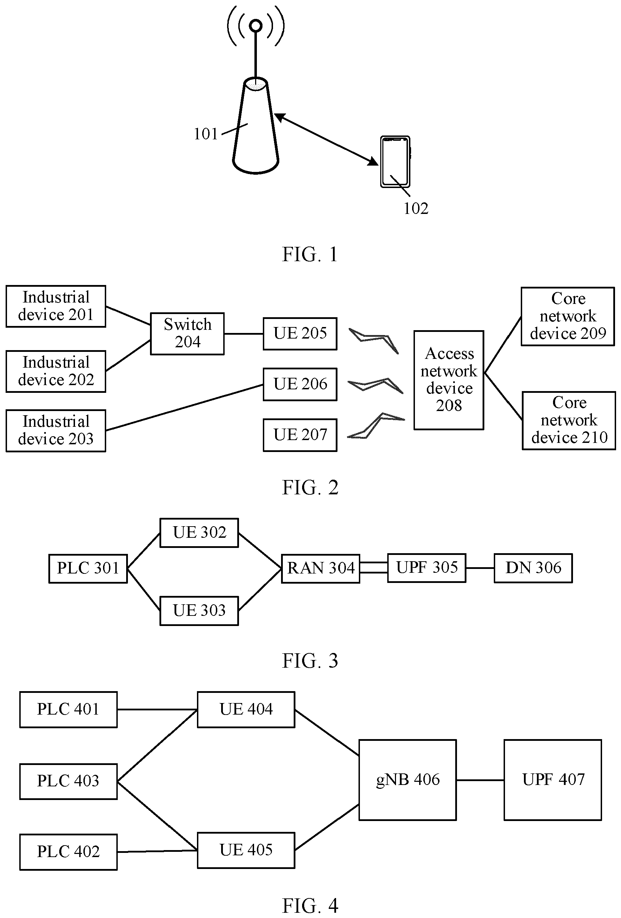

FIG. 1 is a schematic diagram of an architecture of a mobile communication system according to an embodiment of this application. As shown in FIG. 1, the mobile communication system includes a network device 101 and at least one terminal device (for example, a terminal device 102 in FIG. 1). The terminal device 102 is connected to the network device 101 in a wireless manner. The terminal device 102 may be at a fixed location, or may be movable.

It may be understood that quantities of network devices and terminal devices shown in FIG. 1 are merely an example. In an actual process, the quantities of network devices and terminal devices may alternatively be other quantities. Certainly, the communication system may further include another network element, for example, may further include a core network device. The network device may be connected to the core network device. It should be noted herein that specific forms of the network device and the terminal device are not limited in embodiments of this application.

For example, the network device 101 is a device through which the terminal device accesses the mobile communication system in a wireless manner, and may be a NodeB eNB (evolved NodeB), an evolved NodeB (evolved NodeB, eNodeB), a transmission reception point (transmission reception point, TRP), a next generation NodeB (next generation NodeB, gNB) in a 5th generation mobile communication system, a base station in a future mobile communication system, an access point in a wireless fidelity (wireless fidelity, Wi-Fi) system, or the like; or may be a module or a unit that completes some functions of a base station, for example, may be a central unit (central unit, CU), or may be a distributed unit (distributed unit, DU). A specific technology and a specific device form that are used by the network device 101 are not limited in embodiments of this application.

For example, the terminal device 102 may be a wireless terminal or a wired terminal. The wireless terminal may be a device that provides a user with voice and/or other service data connectivity, a handheld device with a wireless connection function, or another processing device connected to a wireless modem. The wireless terminal may communicate with one or more core network devices via a radio access network (radio access network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For another example, the wireless terminal may alternatively be a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit), a subscriber station (subscriber station), a mobile station (mobile station), a mobile (mobile) console, a remote station (remote station), a remote terminal (remote terminal), an access terminal (access terminal), a user terminal (user terminal), a user agent (user agent), a user equipment (user device or user equipment). This is not limited. Optionally, the terminal device may alternatively be a device such as a smartwatch or a tablet.

It should be noted that the communication system shown in FIG. 1 is applicable to different network standards. For example, the communication system is applicable to network standards such as a global system for mobile communications (global system for mobile communications, GSM), code division multiple access (code division multiple access, CDMA), wideband code division multiple access (wideband code division multiple access, WCDMA), time division-synchronous code division multiple access (time division-synchronous code division multiple access, TD-SCDMA), a long term evolution (long term evolution, LTE) system, and a future 5th generation (5th generation, 5G) mobile communication system. Optionally, the communication system may be a system in an ultra-reliable low-latency communication (ultra-reliable low-latency communication, URLLC) transmission scenario in a 5G communication system.

Therefore, optionally, the network device 101 may alternatively be a base station (base transceiver station, BTS) and/or a base station controller in the GSM or the CDMA, or may be a NodeB (NodeB, NB) and/or a radio network controller (radio network controller, RNC) in the WCDMA. This is not limited in this application.

Embodiments of this application may be further applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

The network device 101 and the terminal device 102 may communicate with each other by using a licensed spectrum, or may communicate with each other by using an unlicensed spectrum, or may communicate with each other by using both the licensed spectrum and the unlicensed spectrum. The network device 101 and the terminal device 102 may communicate with each other by using a spectrum below 6 gigahertz (gigahertz, GHz), or may communicate with each other by using a spectrum above 6 GHz, or may communicate with each other by using both the spectrum below 6 GHz and the spectrum above 6 GHz. A spectrum resource used between the network device and the terminal device is not limited in embodiments of this application.

It may be understood that 5G is committed to supporting higher system performance, and supports a plurality of service types, different deployment scenarios, and a wider spectrum range. The plurality of service types include enhanced mobile broadband (enhanced mobile broadband, eMBB), massive machine type communications (massive machine type communications, mMTC), ultra-reliable low-latency communication (ultra-reliable low-latency communication, URLLC), a multimedia broadcast multicast service (multimedia broadcast multicast service, MBMS), a positioning service, and the like. The different deployment scenarios include an indoor hotspot (indoor hotspot) scenario, a dense urban (dense urban) scenario, a suburban scenario, an urban macro (urban macro) scenario, a high-speed railway scenario, and the like. The wider spectral range is a spectral range up to 100 GHz that is supported by 5G, includes a low-frequency part less than 6 GHz, and also includes a high-frequency part ranging from 6 GHz to 100 GHz.

In embodiments of this application, the two terms of the UE and the terminal device are interchangeable, and the three terms of the base station, the access network device, and the network device may also be interchangeable.

In an example, the communication system may include a plurality of core network devices, a plurality of UEs, a plurality of industrial devices, an access network device, a switch/router/hub, and the like. The core network device is an entity of a plurality of functions that is on a network side and that is configured for user management, data transmission, and base station configuration, and includes an action message format (action message format, AMF), a user plane function (user plane function, UPF), a session management function (session management function, SMF), and the like. The access network device is an entity that is on the network side and that is configured to transmit or receive a signal, such as a base station. The UE is an entity that is on a user side and that is configured to transmit or receive a signal, such as a mobile phone or a customer premise equipment (customer premise equipment, CPE). The industrial device is a device that is used in an industrial scenario and that is responsible for generating and processing some control data, such as a programmable logic controller (programmable logic controller, PLC).

Specifically, as shown in FIG. 2, the communication system includes an industrial device 201, an industrial device 202, an industrial device 203, a switch 204, a UE 205, a UE 206, a UE 207, an access network device 208, a core network device 209, and a core network device 210.

In the communication system, the industrial device 202 and the industrial device 203 are connected to the UE 205 through the switch 204, and the industrial device 203 is directly connected to the UE 206. The UE 205, the UE 206, and the UE 207 are connected to the access network device 208 through a radio link, and a base station 203 is connected to the core network device 209 and the core network device 210.

Optionally, the switch 204 may be a router or a hub.

In addition to the industrial scenario, embodiments of this application may also be applied to another scenario, for example, a camera or an uncrewed aerial vehicle communication scenario.

In a current conventional technology, a PLC or another device may communicate with a server via a terminal device and an access network device.

In an example, as shown in FIG. 3, the communication system includes a PLC 301, a UE 302, a UE 303, a radio access network (radio access network, RAN) 304, a user plane function (user plane function, UPF) 305, and a data network (data network, DN) 306.

In the communication system, control data generated by the PLC 301 is sent to both the UE 302 and the UE 303, the UE 302 and the UE 303 send the same data to the RAN 304 and the UPF 305, and then the data arrives at a data destination DN 306. Similarly, downlink data arrives at the UE 302 and the UE 303 via the RAN 304 and the UPF 305 respectively and is sent by the UE 302 and the UE 303 to the PLC 301, and then the PLC 301 processes the related data. In this way, even if one UE is faulty, a service of the PLC 301 is not affected.

However, in the transmission manner, a same piece of service data needs to be transmitted twice from the UE to the RAN and then to the UPF, and double air interface resources, transmission resources, processing resources of a station, and power resources of the UE need to be consumed. In addition, a fault of the UE occurs occasionally. For an occasional event, consuming a large quantity of resources for a long time reduces system efficiency. In addition, in other scenarios, multi-UE coordinated transmission needs to be used, for example, multi-UE aggregation transmission performed to improve an uplink transmission rate, dynamic handover transmission of a service performed between different UEs to ensure service flexibility, and multi-UE synchronous transmission performed by a plurality of UEs to complete a same task. However, a conventional mechanism is not applicable to the foregoing scenarios.

Therefore, a person skilled in the art provides the following technical solution: A plurality of UEs that have an association relationship cooperate to perform data communication with a base station (an access network device). For example, when the base station communicates with a PLC or another device, the plurality of UEs access the base station. At a moment, only one of the UEs is used to perform data transmission with the base station, and the base station continuously detects a working status of the UE in a data transmission process. If the UE is faulty, the base station indicates, based on the association relationship between the UEs that is stored by the base station, another UE associated with the UE to replace the UE to perform data transmission.

For example, FIG. 4 is a schematic diagram of an example network architecture according to an embodiment of this application. The network architecture includes a PLC 401, a PLC 402, a PLC 403, a UE 404, a UE405, a gNB 406, and a UPF 407.

The PLC 401 is connected to the UE 404, and the UE 404 is responsible for sending and receiving service data related to the PLC 401.

The PLC 402 is connected to the UE 405, and the UE 405 is responsible for sending and receiving service data related to the PLC 402.

The PLC 403 is connected to the UE 404 and the UE 405. Uplink service data of the PLC 403 is sent to the UE 404 and the UE 405 via the PLC 403 or another device, and then the UE 404 and the UE 405 send the data to the gNB 406 and the UPF 407. A downlink service is sent from the UPF 407 and the gNB 406, and then to the PLC 403 via the UE 404 and/or the UE 405. The UE 404 and the UE 405 may provide reliability assurance for a service of the PLC.

It may be understood that, for the PLC 403, considering a device reliability problem, the two UEs jointly serve the PLC 403. At a moment, only one UE needs to provide a data transmission service for the PLC 403, and the UE that provides the service for the PLC 403 is a primary UE, and the other UE is a backup UE. When the primary UE is not faulty, the backup UE may not perform data transmission. When the primary UE is faulty, the base station indicates the backup UE to start data transmission, which is referred to as backup transmission.

In addition to the reliability problem, an uplink transmission rate is also a problem. To improve the uplink transmission rate, the plurality of UEs may cooperate to perform uplink transmission. For example, each UE is responsible for some data transmission, which is referred to as aggregation transmission.

However, in the case that the communication between the base station and the PLC or the another device is implemented through multi-UE cooperation (backup transmission or aggregation transmission), to determine UEs specifically to be used to complete the communication between the base station and the PLC or the another device through the cooperation, the base station needs to learn of an association relationship between the UEs, to select UEs having an association relationship for the communication. However, a person skilled in the art does not further point out how the base station determines the association relationship between the UEs. Therefore, how to determine the association relationship between the UEs becomes a technical problem to be urgently resolved.

In view of this, embodiments of this application provide a communication method. In the method, an access network device determines an association relationship between terminal devices based on information reported by the terminal device. Further, the access network device provides a more effective coordinated transmission service for the terminal device based on the association relationship between the terminal devices.

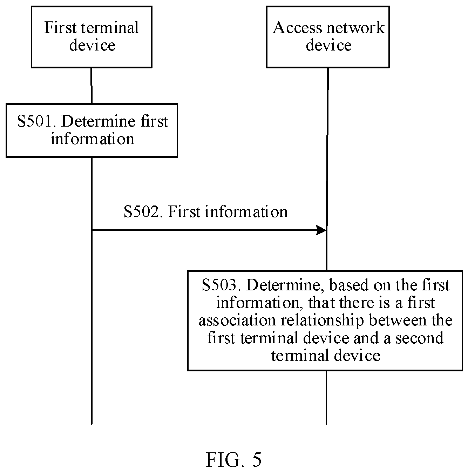

FIG. 5 is a flowchart of a communication method according to an embodiment of this application. As shown in FIG. 5, the method provided in this embodiment of this application includes S501, S502, and S503. The following describes in detail the steps in the method shown in FIG. 5.

S501. A first terminal device determines first information, where the first information includes information about the first terminal device.

It should be understood that the first information includes at least one of the following information: location information of the first terminal device, an identifier of the first terminal device, a group identifier of the first terminal device, a service identifier of the first terminal device, an address of a first device connected to the first terminal device, an identifier of the first device, and a first application layer identifier. The location information of the first terminal device is a current geographical location of the first terminal device. The identifier of the first terminal device may be preconfigured, or configured by a base station or a core network device. The group identifier of the first terminal device may identify specific terminal devices that belong to a same group, in other words, that have an association relationship. The address of the first device connected to the first terminal device may be a MAC address or an IP address of the first device. The first device may be an industrial device or another electronic device. The identifier of the first device may be a device identifier preconfigured in the first terminal device or sent by the first device to the first terminal device.

S502. The first terminal device sends the first information to an access network device, and correspondingly, the access network device receives the first information.

Optionally, before the first terminal device sends the first information to the access network device, the access network device may send indication information to the first terminal device, to request the first terminal device to report the first information.

S503. The access network device determines, based on the first information, that there is a first association relationship between the first terminal device and a second terminal device.

In an optional implementation, the access network device receives second information, where the second information includes at least one of the following information: location information of the second terminal device, an identifier of the second terminal device, a group identifier of the second terminal device, a service identifier of the second terminal device, an address of a second device connected to the second terminal device, an identifier of the second device, and a second application layer identifier.

It should be understood that the location information of the second terminal device is a current geographical location of the second terminal device. The identifier of the second terminal device may be preconfigured, or configured by the base station or the core network device. The group identifier of the second terminal device may identify specific terminal devices that belong to a same group, in other words, that have an association relationship. The address of the second device connected to the second terminal device may be a MAC address or an IP address of the second device. The second device may be an industrial device or another electronic device. The identifier of the second device may be a device identifier preconfigured in the second terminal device or sent by the second device to the second terminal device.

Optionally, the access network device determines the first association relationship between the first terminal device and the second terminal device based on the first information and the second information.

Specifically, when the first information of the first terminal device and the second information of the second terminal device that are received by the access network device are the same or similar, that is, the first information and the second information meet a first condition, the access network device determines the first association relationship between the first terminal device and the second terminal device, and stores the first association relationship. The first condition includes at least one of the following conditions: A distance between a location of the first terminal device and a location of the second terminal device is less than a first preset threshold, the identifier of the first terminal device is the same as the identifier of the second terminal device, the group identifier of the first terminal device is the same as the group identifier of the second terminal device, the service identifier of the first terminal device is the same as the service identifier of the second terminal device, the address of the first device connected to the first terminal device is the same as the address of the second device connected to the second terminal device; the identifier of the first device is the same as the identifier of second device, and the first application layer identifier is the same as the second application layer identifier.

Further, the access network device sends third information to the first terminal device, where the third information is used to acknowledge the first information. Alternatively, the access network device sends fourth information to the second terminal device, where the fourth information is used to acknowledge the second information. The third information or the fourth information includes at least one of the following information: an identifier of the first association relationship, primary terminal device indication information, secondary terminal device indication information, and an identifier of a first group, where the primary terminal device indication information indicates that the first terminal device is a primary terminal device in the first terminal device and the second terminal device, and the secondary terminal device indication information indicates that the second terminal device is a secondary terminal device in the first terminal device and the second terminal device.

For example, in a communication system, in a multi-terminal device coordinated transmission mode, when the primary terminal device is normal, communication with the access network device is performed only by the primary terminal device, and the secondary terminal device is in a waiting state. After the primary terminal device is faulty, the access network device indicates the secondary terminal device to replace the primary terminal device to communicate with the access network device.

Optionally, a third terminal device reports fifth information to the access network device, and correspondingly, the access network device receives the fifth information, where the fifth information includes at least one of the following information: location information of the third terminal device, a third identifier of the third terminal device, a group identifier of the third terminal device, a service identifier of the third terminal device, an address of a third device connected to the third terminal device, an identifier of the third device, and a third application layer identifier.

It should be understood that the location information of the third terminal device is a current geographical location of the third terminal device. The identifier of the third terminal device may be preconfigured, or configured by the base station or the core network device. The group identifier of the third terminal device may identify specific terminal devices that belong to a same group, in other words, have an association relationship. The address of the third device connected to the third terminal device may be a MAC address or an IP address of the third device. The third device may be an industrial device or another electronic device. The identifier of the third device may be a device identifier preconfigured in the third terminal device or sent by the third device to the third terminal device.

Optionally, the access network device determines a second association relationship between the first terminal device and the third terminal device based on the first information and the fifth information.

Specifically, when the first information of the first terminal device and the fifth information of the third terminal device that are received by the access network device are the same or similar, that is, the first information and the fifth information meet a second condition, the access network device determines the second association relationship between the first terminal device and the third terminal device, and stores the second association relationship. The second condition includes at least one of the following conditions: A distance between the location of the first terminal device and a location of the third terminal device is less than a second preset threshold, the identifier of the first terminal device is the same as the third identifier of the third terminal device, the group identifier of the first terminal device is the same as the group identifier of the third terminal device, the service identifier of the first terminal device is the same as the service identifier of the third terminal device, the address of the first device connected to the first terminal device is the same as the address of the third device connected to the third terminal device, the identifier of the first device is the same as the identifier of third device, and the first application layer identifier is the same as the third application layer identifier.

Further, the access network device updates the originally stored first association relationship to the second association relationship.

Optionally, for two terminal devices that have been associated, if information reported by one of the terminal devices changes and does not meet a condition, the access network device removes an association relationship between the terminal devices.

For example, when the access network device receives the fifth information reported by the third terminal device, if the fifth information is the same as or similar to the first information of the first terminal device, that is, the condition is met, the access network device establishes the association relationship between the third terminal device and the first terminal device. In this case, if the second information reported by the second terminal device and the first information or the fifth information also meet a condition, the access network device may establish an association relationship between the first terminal device, the second terminal device, and the third terminal device, or associate any two of the three terminal devices. If the second information reported by the second terminal device does not meet the condition, the access network device updates the originally stored association relationship between the first terminal device and the second terminal device to the association relationship between the first terminal device and the third terminal device.

Optionally, the access network device may send indication information to the first terminal device, the second terminal device, and the third terminal device, to request at least one of the terminal devices to report information.

Optionally, the information reported by the terminal device to the access network device may alternatively be triggered by an event or periodic. For example, for the first terminal device and the second terminal device that have been associated, if the address location of the second terminal device changes, or the device connected to the second terminal device changes, the second terminal device reports second information again. Alternatively, the access network device presets a periodicity, for example, indicates the second terminal device to report second information to the access network device every hour, regardless of whether the second information changes.

In this implementation, the terminal devices may not need to interact with each other, and the association relationship between the terminal devices is established and maintained by the access network device. To be specific, the terminal device reports the information to the base station, and the base station determines the association relationship between the terminal devices based on the received information reported by the terminal device.

In another optional implementation, the first information reported by the first terminal device may alternatively indicate that there is a first association relationship between a terminal device corresponding to a first identifier and a terminal device corresponding to a second identifier. The first identifier is an identifier of the first terminal device in the access network device, and the second identifier is an identifier of the second terminal device in the access network device.

Optionally, before the access network device receives the first information, the access network device sends seventh information to the first terminal device, where the seventh information indicates that the identifier of the first terminal device in the access network device is the first identifier; and the access network device sends eighth information to the second terminal device, where the eighth information indicates that the identifier of the second terminal device in the access network device is the second identifier.

In this implementation, the first association relationship between the first terminal device and the second terminal device is mainly established by the terminal devices, and then reported to the access network device. A specific process is described in detail below.

First, the first terminal device initiates an association to the second terminal device. For example, the first terminal device may determine the association relationship through discovery by using a wireless technology such as an edge connection (sidelink), Bluetooth, or Wi-Fi, or through wired connection interaction and negotiation.

In an example, the first terminal device determines that the second terminal device is close to the first terminal device, or the first terminal device and the second terminal device are connected to a same device. In this case, the first terminal device initiates an association request to the second terminal device, and correspondingly, the second terminal device responds to the first terminal device, and sends an association acknowledgment indication or an association rejection indication to the first terminal device.

In another example, when the first terminal device sends the association request to the second terminal device, the association request carries the information about the first terminal device, for example, at least one of the following information: the location information of the first terminal device, the identifier of the first terminal device, the group identifier of the first terminal device, the service identifier of the first terminal device, the address of the first device connected to the first terminal device, the identifier of the first device, and the first application layer identifier. The second terminal device determines, based on the information in the received association request, whether to associate with the first associated device.

After uplink service data arrives at the first terminal device and the second terminal device, the first terminal device and the second terminal device initiate a radio resource control (radio resource control, RRC) connection setup request to the access network device. After RRC setup is completed through a random access process, the access network device allocates the first identifier and the second identifier (for example, a cell radio network temporary identifier (cell radio network temporary identifier, C-RNTI)) to the first terminal device and the second terminal device respectively in an RRC setup message, and then the first terminal device and the second terminal device that have the association relationship exchange respective identifiers.

Further, the first terminal device sends indication information to the access network device, where the indication information carries the second identifier of the second terminal device; or the second terminal device sends indication information to the access network device, where the indication information carries the first identifier of the first terminal device. In this case, the access network device determines the first association relationship between the first terminal device and the second terminal device.

Optionally, the indication information sent by the first terminal device to the access network device may further include an association indication, where the association indication indicates that an objective of the indication information is association.

After determining the association relationship between the first terminal device and the second terminal device, the access network device generates RRC configuration information and sends the RRC configuration information to the first terminal device. The RRC configuration information includes at least one of the following information: transmission mode information and an uplink transmission offloading proportion, where the transmission mode information includes a backup transmission mode, an aggregation transmission mode, and the like, and the uplink transmission offloading proportion indicates specific data packets transmitted by the first terminal device and specific data packets transmitted by the second terminal device.

Further, the access network device may directly send the RRC configuration information to the second terminal device, or forward the RRC configuration information to the second terminal device via the first terminal device.

Optionally, the association relationship between the terminal devices may be updated. For example, when quality of a link between the terminal devices is poor, another terminal device may be selected for association, and indication information is sent to the access network device, to update the association relationship between the terminal devices, in other words, update the association relationship previously stored in the access network device to a new association relationship.

In an example, the access network device receives ninth information sent by the first terminal device, where the ninth information indicates that the terminal device corresponding to the first identifier and a terminal device corresponding to a fourth identifier have a third association relationship, and the fourth identifier is an identifier of a fourth terminal device in the access network device. In this case, the access network device updates the first association relationship to the third association relationship.

Optionally, after an RRC wireless connection between one of the terminal devices that have established the association relationship and the access network device fails, the terminal device initiates an RRC connection re-setup process to the access network device. In the process, the access network device may allocate a new identifier C-RNTI to the terminal device. After the new RNTI is received, the terminal devices need to interact with each other, to ensure that another terminal device knows the updated C-RNTI of the terminal device.

After the access network device determines the association relationship between the terminal devices through any one of the foregoing implementations, the access network device performs service transmission based on the determined association relationship.

Specifically, when an uplink service arrives at the first terminal device and the second terminal device, the first terminal device and the second terminal device receive first indication information sent by the access network device, where the first indication information indicates that the first terminal device is the primary terminal device. The primary terminal device determines, based on a reliability requirement of the service and quality of service (quality of service, QoS) of the service, whether to enable terminal device coordinated transmission. If the terminal device coordinated transmission needs to be enabled, the primary terminal device sends sixth information to the access network device.

Correspondingly, the access network device receives the sixth information sent by the first terminal device, where the sixth information indicates to enable the terminal device coordinated transmission. At the same time, the primary terminal device initiates the RRC connection setup request to the access network device.

The terminal device coordinated transmission means that at least two terminal devices that have an association relationship perform aggregation transmission or backup transmission with the access network device. The aggregation transmission means that the access network device receives, in an aggregation manner, data sent by the terminal device, and further performs transmission. The backup transmission means that in a data transmission process, a plurality of terminal devices that have an association relationship are connected between the access network device and a terminal, where the plurality of terminal devices that have the association relationship include a primary terminal device and a backup terminal device. When the primary terminal device is normal, communication with the access network device is performed only by the primary terminal device, and the backup terminal device is in a waiting state. When the primary terminal device is faulty, the backup terminal device replaces the primary terminal device to communicate with the access network device.

It should be noted that the backup terminal device in this application may also be referred to as a secondary terminal device.

Optionally, the first terminal device determines, based on the QoS of the service, that the terminal device coordinated transmission needs to be enabled; and may include second indication information in the RRC connection setup request sent by the first terminal device to the access network device, where the second indication information indicates to enable the terminal device coordinated transmission.

Optionally, the sixth information includes the first information of the primary terminal device or the identifier of the first association relationship. In this way, the access network device may identify another associated secondary terminal device based on the pre-stored first association relationship. If the another associated secondary terminal device is in a non-RRC connected mode, the access network device initiates paging to the secondary terminal device, and restores or establishes an RRC connection to the secondary terminal device.

If the sixth information does not include the first information of the primary terminal device or the identifier of the first association relationship, the access network device does not need to search for another associated secondary terminal device.

Specifically, in a process in which the access network device initiates the paging to the secondary terminal device, the access network device may further determine, based on the QoS of the service, whether to page the secondary terminal device. In addition, when performing the paging, the access network device needs to determine a paging occasion, a paging identifier, and the like based on a paging parameter, where the paging parameter may be preconfigured in the access network device, sent by the core network device to the access network device, or obtained through a combination of the two manners. The paging parameter includes at least one of the following: a secondary terminal device identifier, a DRX cycle, a tracking area identifier, and the like.

In another optional implementation, when an uplink service arrives at the first terminal device and the second terminal device, the first terminal device and the second terminal device receive third indication information sent by the access network device, where the third indication information indicates that the second terminal device associated with the first terminal device is the secondary terminal device. The first terminal device normally initiates an RRC connection setup request to the access network device, and the secondary terminal device determines, based on a reliability requirement of the service and QoS of the service, whether to enable terminal device coordinated transmission. If the terminal device coordinated transmission needs to be enabled, the secondary terminal device initiates an RRC connection setup request to the access network device. If the terminal device coordinated transmission does not need to be enabled, the secondary terminal device continues to remain in an idle state.

Correspondingly, the access network device establishes an RRC connection for the primary terminal device. Optionally, if the secondary terminal device initiates the RRC connection setup request, the access network device establishes an RRC connection for the secondary terminal device.

In this implementation, the terminal devices establish the association relationship through interaction and report the association relationship to the access network device. The access network device sends a related configuration to the terminal device based on the association relationship, and provides a more effective coordinated transmission service for the terminal device.

In the technical solutions of this application, the access network device determines the association relationship between the terminal devices based on the information reported by the terminal device, or the terminal devices establish the association relationship through interaction and report the association relationship to the access network device. The access network device sends related configuration information to the terminal device based on the association relationship between the terminal devices, and provides the more effective coordinated transmission service for the terminal device.

In addition to the methods in which the access network device determines the association relationship between the terminal devices and that are mentioned in the foregoing two embodiments, when a terminal device is handed over between different access network devices, the access network devices may further exchange the association relationship between the terminal devices. A specific process is described in detail below.

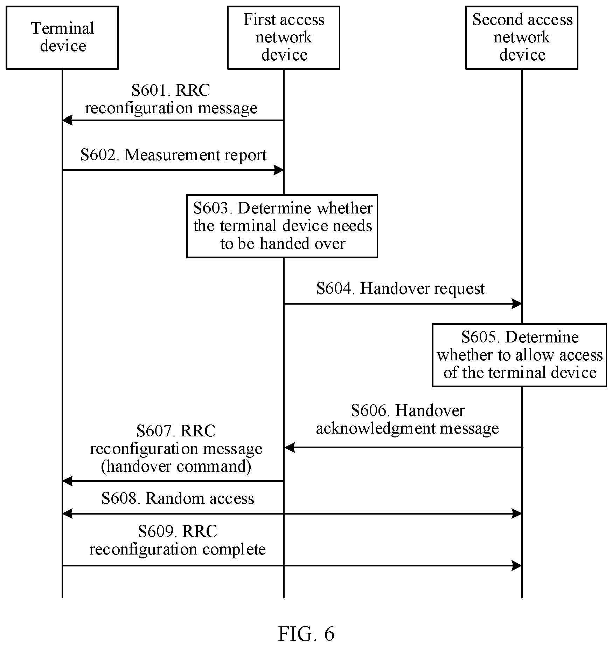

In a communication system, in a conventional handover procedure, mobility management of a terminal device in a connected mode is controlled by a network device. To be specific, the network device sends a handover message, to indicate, to the terminal device, a cell to which the terminal device is to be handed over and how to perform handover. A specific procedure is shown in FIG. 6. After receiving the handover message, the terminal device accesses a target cell based on content included in the handover message. Therefore, successful sending of the handover message is a prerequisite for ensuring successful handover in a conventional handover mechanism.

S601. A first access network device sends an RRC reconfiguration message to a terminal device in a connected mode, where the RRC reconfiguration message includes parameters such as a measurement object, a report configuration, and a measurement identifier, and the first access network device may also be referred to as a source base station.

S602. After measuring a series of cells based on the received RRC reconfiguration message, the terminal device forms a measurement report, and reports various events to the currently connected first access network device, where for example, a signal strength of a current serving cell is less than a threshold, and a signal of the target cell is greater than the threshold.

S603. After receiving the measurement report reported by the terminal device, the first access network device determines whether the terminal device needs to be handed over.

S604. If the terminal device needs to be handed over, the first access network device sends a handover request to a second access network device, and correspondingly, the second access network device receives the handover request sent by the first access network device.

In this embodiment, the second access network device may also be referred to as a target base station.

S605. The second access network device determines, based on a status such as a quantity of connections of the second access network device, whether to allow access of the terminal device.

S606. If access of the terminal device is allowed, send a handover acknowledgment message to the first access network device, where the handover acknowledgment message includes parameters such as a new C-RNTI and a security-related algorithm of the second access network device.

S607. After receiving the handover acknowledgment message sent by the second access network device, the first access network device sends an RRC reconfiguration message (handover command) to the terminal device, where content included in the RRC reconfiguration message is from the handover acknowledgment message in step S606, that is, the first access network device is transparent.

Specifically, the handover command in an NR system includes related information of the target cell and a related configuration parameter needed for the terminal device to access the target cell. For example, the handover command includes information about the target cell (for example, a physical cell identifier (physical cell identifier, PCI) of the target cell) and frequency information corresponding to the target cell (for example, a frequency corresponding to the target cell. Specifically, in the NR system, for content included in the frequency information, refer to specific descriptions of downlink frequency information (FrequencyInfoDL IE) in the protocol TS38331), a C-RNTI allocated by the target cell to the terminal device, random access channel (random access channel, RACH) resource information (for example, a dedicated RACH resource and/or a common RACH resource) needed for accessing the target cell, and the like.

S608. The terminal device initiates random access to the second access network device according to the handover command. In a conventional handover procedure, the terminal device disconnects from the first access network device, and a temporary interruption occurs when the terminal device receives and sends data before successfully accessing the second access network device.

S609. The terminal device sends an RRC reconfiguration complete message to the second access network device.

Based on the conventional handover procedure, in step S604, when the first access network device sends a handover request message to the second access network device, the handover request message may include an association relationship between terminal devices. A specific process is described in detail below.

The first access network device sends the handover request to the second access network device, and correspondingly, the second access network device receives the handover request sent by the first access network device. The handover request indicates the association relationship between the terminal devices, and the handover request includes at least one of the following information: identifiers of the terminal devices, an association indication for the terminal devices, and an association identifier for the terminal devices.

The second access network device may establish and store the association relationship between the terminal devices in advance based on the received handover request.

Optionally, the handover request further includes radio bearer identifiers of the terminal devices. It should be understood that there may be a plurality of radio bearers in the terminal devices at the same time. When the association relationship is indicated, which radio bearers of different terminal devices are associated with each other may be further indicated in indication information. For example, that a radio bearer 1 of a terminal device 1 and a radio bearer of a terminal device 2 are associated with each other is indicated.

Optionally, after storing the association relationship between the terminal devices or an association relationship between the radio bearers of the terminal devices, the second access network device sends RRC configuration information to the terminal device. The RRC configuration information includes at least one of the following information: transmission mode information and an uplink transmission offloading proportion, where the transmission mode information includes a backup transmission mode, an aggregation transmission mode, and the like; and the uplink transmission offloading proportion indicates specific data packets transmitted by specific terminal devices.

In this embodiment, in a handover process, a source base station includes the association relationship between the terminal devices in the handover request and sends the handover request to the target base station. The target base station may learn of the association relationship between the terminal devices in advance, and does not need to establish the association relationship between the terminal devices based on another procedure. This can reduce resource consumption. In addition, the base station may provide a more effective coordinated transmission service for the terminal device based on the association relationship between the terminal devices.

The technical solutions of this application are mainly applied to a wireless communication system, for example, a wireless communication system such as 4G, 5G, or 6G, or may be applied to another communication system, provided that in the communication system, one entity needs to send transmission direction indication information, and another entity needs to receive the indication information, and determine a data transmission direction within a specific time period based on the indication information.

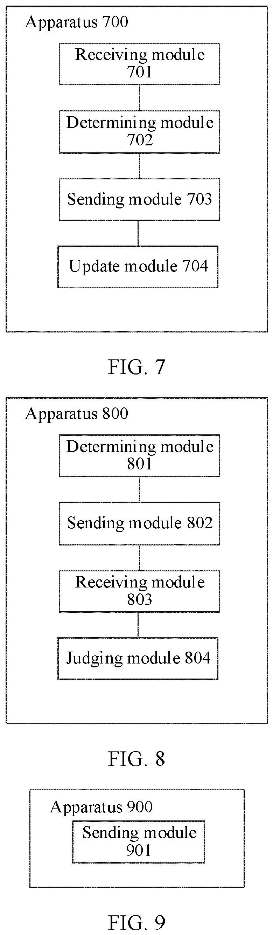

The foregoing describes in detail the communication methods in embodiments of this application with reference to FIG. 1 to FIG. 6. The following describes in detail communication apparatuses in embodiments of this application with reference to FIG. 7 to FIG. 11.

FIG. 7 shows a communication apparatus 700 according to an embodiment of this application. The apparatus 700 includes a receiving module 701, a determining module 702, a sending module 703, and an update module 704.

The receiving module 701 is used by an access network device to receive first information, where the first information includes information about a first terminal device. The determining module 702 is used by the access network device to determine, based on the first information, that there is a first association relationship between the first terminal device and a second terminal device.

In an example, the apparatus 700 may be configured to perform the communication method shown in FIG. 5. For example, the receiving module 701 is configured to perform S502, and the determining module 702 is configured to perform S503.

In a possible implementation, the first information includes at least one of the following information: location information of the first terminal device, an identifier of the first terminal device, a group identifier of the first terminal device, a service identifier of the first terminal device, an address of a first device connected to the first terminal device, an identifier of the first device, and a first application layer identifier.

In a possible implementation, the receiving module 701 is further used by the access network device to receive second information, where the second information includes at least one of the following information: location information of the second terminal device, an identifier of the second terminal device, a group identifier of the second terminal device, a service identifier of the second terminal device, an address of a second device connected to the second terminal device, an identifier of the second device, and a second application layer identifier. The determining module 702 is further used by the access network device to determine the first association relationship between the first terminal device and the second terminal device based on the first information and the second information.

In a possible implementation, the determining module 702 is specifically used by the access network device to: if the first information and the second information meet a first condition, determine the first association relationship between the first terminal device and the second terminal device. The first condition includes at least one of the following conditions: A distance between a location of the first terminal device and a location of the second terminal device is less than a first preset threshold, the identifier of the first terminal device is the same as the identifier of the second terminal device, the group identifier of the first terminal device is the same as the group identifier of the second terminal device, the service identifier of the first terminal device is the same as the service identifier of the second terminal device, the address of the first device connected to the first terminal device is the same as the address of the second device connected to the second terminal device, the identifier of the first device is the same as the identifier of second device, and the first application layer identifier is the same as the second application layer identifier.

In a possible implementation, the sending module 703 is used by the access network device to send third information to the first terminal device, where the third information is used to acknowledge the first information; or used by the access network device to send fourth information to the second terminal device, where the fourth information is used to acknowledge the second information.

In a possible implementation, the third information or the fourth information includes at least one of the following information: an identifier of the first association relationship, primary terminal device indication information, secondary terminal device indication information, and an identifier of a first group. The primary terminal device indication information indicates that the first terminal device is a primary terminal device in the first terminal device and the second terminal device, the secondary terminal device indication information indicates that the second terminal device is a secondary terminal device in the first terminal device and the second terminal device, and the first group includes the first terminal device and the second terminal device.

In a possible implementation, the receiving module 701 is further used by the access network device to receive fifth information, where the fifth information includes at least one of the following information: location information of a third terminal device, a third identifier of the third terminal device, a group identifier of the third terminal device, a service identifier of the third terminal device, an address of a third device connected to the third terminal device, an identifier of the third device, and a third application layer identifier. The determining module 702 is further used by the access network device to determine a second association relationship between the first terminal device and the third terminal device based on the first information and the fifth information.

In a possible implementation, the determining module 702 is specifically used by the access network device to: if the first information and the fifth information meet a second condition, determine the second association relationship between the first terminal device and the third terminal device. The second condition includes at least one of the following conditions: A distance between the location of the first terminal device and a location of the third terminal device is less than a second preset threshold, the identifier of the first terminal device is the same as the third identifier of the third terminal device, the group identifier of the first terminal device is the same as the group identifier of the third terminal device, the service identifier of the first terminal device is the same as the service identifier of the third terminal device, the address of the first device connected to the first terminal device is the same as the address of the third device connected to the third terminal device, the identifier of the first device is the same as the identifier of third device, and the first application layer identifier is the same as the third application layer identifier. The update module 704 is used by the access network device to update the first association relationship to the second association relationship.

In a possible implementation, the receiving module 701 is further used by the access network device to receive sixth information sent by the first terminal device, where the sixth information indicates to enable terminal device coordinated transmission, and the terminal device coordinated transmission means that at least two terminal devices that have an association relationship perform aggregation transmission or backup transmission with the access network device. The determining module 702 is further used by the access network device to determine, based on the first association relationship, the second terminal device that has the association relationship with the first terminal device.

In a possible implementation, the sixth information includes the first information or the identifier of the first association relationship.

FIG. 8 shows a communication apparatus 800 according to an embodiment of this application. The apparatus 800 includes a determining module 801, a sending module 802, a receiving module 803, and a judging module 804.

The determining module 801 is used by a terminal device to determine first information, where the first information includes at least one of the following information: location information of the terminal device, an identifier of the terminal device, a group identifier of the terminal device, a service identifier of the terminal device, an address of a first device connected to the terminal device, an identifier of the first device, and a first application layer identifier. The sending module 802 is used by the terminal device to send the first information to an access network device.

In an example, the apparatus 800 may be configured to perform the communication method shown in FIG. 5. For example, the determining module 801 is configured to perform S501, and the sending module 802 is configured to perform S502.

In a possible implementation, the receiving module 803 is used by the terminal device to receive first indication information sent by the access network device, where the first indication information indicates that the terminal device is a primary terminal device.

In a possible implementation, the judging module 804 is used by the terminal device to: determine, based on quality of service QoS of a service, that terminal device coordinated transmission needs to be enabled, and include second indication information in a radio resource control RRC connection setup request sent by the terminal device to the access network device, where the second indication information indicates to enable the terminal device coordinated transmission.

FIG. 9 shows a communication apparatus 900 according to an embodiment of this application. The apparatus 900 includes a sending module 901.

The sending module 901 is used by a first access network device to send a handover request to a second access network device, where the handover request indicates an association relationship between terminal devices, and the handover request includes at least one of the following information: identifiers of the terminal devices, an association indication for the terminal devices, and an association identifier for the terminal devices.

In an example, the apparatus 900 may be configured to perform the method shown in FIG. 6. For example, the sending module 901 is configured to perform S604.

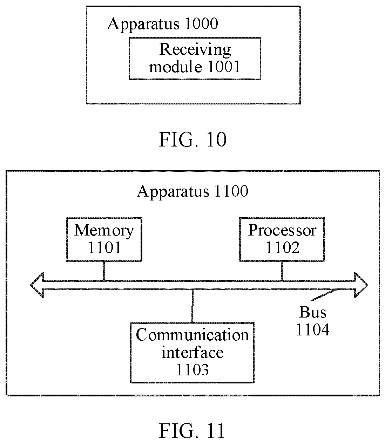

FIG. 10 shows a communication apparatus 1000 according to an embodiment of this application. The apparatus 1000 includes a receiving module 1001.

The receiving module 1001 is used by a second access network device to receive a handover request sent by a first access network device, where the handover request indicates an association relationship between terminal devices, and the handover request includes at least one of the following information: identifiers of the terminal devices, an association indication for the terminal devices, and an association identifier for the terminal devices.

In an example, the apparatus 1000 may be configured to perform the method shown in FIG. 6. For example, the receiving module 1001 is configured to perform S604.

In a possible implementation, the handover request further includes bearer identifiers of the terminal devices.

FIG. 11 is a schematic diagram of an apparatus according to another embodiment of this application. The apparatus shown in FIG. 11 may be configured to perform the method in any one of the foregoing embodiments.

As shown in FIG. 11, the apparatus 1100 in this embodiment includes: a memory 1101, a processor 1102, a communication interface 1103, and a bus 1104. The memory 1101, the processor 1102, and the communication interface 1103 communicate with each other through the bus 1104.

The memory 1101 may be a read-only memory (read-only memory, ROM), a static storage device, a dynamic storage device, or a random access memory (random access memory, RAM). The memory 1101 may store a program. When the program stored in the memory 1101 is executed by the processor 1102, the processor 1102 is configured to perform the steps of the method in the foregoing embodiments.

The processor 1102 may be a general-purpose central processing unit (central processing unit, CPU), a microprocessor, an application-specific integrated circuit (application-specific integrated circuit, ASIC), or one or more integrated circuits, and is configured to execute a related program, to implement the methods in embodiments of this application.

The processor 1102 may alternatively be an integrated circuit chip with a signal processing capability. In an implementation process, the steps of the method in embodiments of this application may be completed by using an integrated logic circuit of hardware in the processor 1102 or instructions in a form of software.

The processor 1102 may alternatively be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 1101, and completes, in combination with the hardware in the processor 1102, functions that need to be performed by the units included in the apparatus in this application.

The communication interface 1103 may use, but not limited to, a transceiver apparatus of a transceiver type, to implement communication between the apparatus 1100 and another device or a communication network.

The bus 1104 may be included in a channel on which information is transmitted among the parts (for example, the memory 1101, the processor 1102, and the communication interface 1103) of the apparatus 1100.

It should be understood that the apparatus 1100 shown in this embodiment of this application may be an electronic device, or may be a chip configured in the electronic device.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually represents an "or" relationship between associated objects, but may also represents an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and the electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one location, or may be distributed on a plurality of network units. Some or all of the units may be selected based on an actual requirement to achieve objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, or the part contributing to the conventional technology, or some of the technical solutions may be implemented in the form of the software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an access network device, first information, wherein the first information comprises information about a first terminal device; and
determining, by the access network device based on the first information, that there is a first association relationship between the first terminal device and a second terminal device.

2. The method according to claim 1, wherein the first information comprises at least one of the following information: location information of the first terminal device, an identifier of the first terminal device, a group identifier of the first terminal device, a service identifier of the first terminal device, an address of a first device connected to the first terminal device, an identifier of the first device, and a first application layer identifier.

3. The method according to claim 2, wherein the method further comprises:
receiving, by the access network device, second information, wherein the second information comprises at least one of the following information: location information of the second terminal device, an identifier of the second terminal device, a group identifier of the second terminal device, a service identifier of the second terminal device, an address of a second device connected to the second terminal device, an identifier of the second device, and a second application layer identifier; and
the determining, by the access network device based on the first information, that there is a first association relationship between the first terminal device and a second terminal device comprises:
determining, by the access network device, the first association relationship between the first terminal device and the second terminal device based on the first information and the second information.

4. The method according to claim 3, wherein the determining, by the access network device, the first association relationship between the first terminal device and the second terminal device based on the first information and the second information comprises:
if the first information and the second information meet a first condition, determining, by the access network device, the first association relationship between the first terminal device and the second terminal device, wherein
the first condition comprises at least one of the following conditions: a distance between a location of the first terminal device and a location of the second terminal device is less than a first preset threshold, the identifier of the first terminal device is the same as the identifier of the second terminal device, the group identifier of the first terminal device is the same as the group identifier of the second terminal device, the service identifier of the first terminal device is the same as the service identifier of the second terminal device, the address of the first device connected to the first terminal device is the same as the address of the second device connected to the second terminal device, the identifier of the first device is the same as the identifier of second device, and the first application layer identifier is the same as the second application layer identifier.

5. The method according to claim 3 or 4, wherein the method further comprises:
sending, by the access network device, third information to the first terminal device, wherein the third information is used to acknowledge the first information; or
sending, by the access network device, fourth information to the second terminal device, wherein the fourth information is used to acknowledge the second information.

6. The method according to claim 5, wherein the third information or the fourth information comprises at least one of the following information: an identifier of the first association relationship, primary terminal device indication information, secondary terminal device indication information, and an identifier of a first group, wherein the primary terminal device indication information indicates that the first terminal device is a primary terminal device in the first terminal device and the second terminal device, the secondary terminal device indication information indicates that the second terminal device is a secondary terminal device in the first terminal device and the second terminal device, and the first group comprises the first terminal device and the second terminal device.

7. The method according to any one of claims 2 to 6, wherein the method further comprises:
receiving, by the access network device, fifth information, wherein the fifth information comprises at least one of the following information: location information of a third terminal device, a third identifier of the third terminal device, a group identifier of the third terminal device, a service identifier of the third terminal device, an address of a third device connected to the third terminal device, an identifier of the third device, and a third application layer identifier; and
determining, by the access network device, a second association relationship between the first terminal device and the third terminal device based on the first information and the fifth information.

8. The method according to claim 7, wherein the determining, by the access network device, a second association relationship between the first terminal device and the third terminal device based on the first information and the fifth information comprises:
if the first information and the fifth information meet a second condition, determining, by the access network device, the second association relationship between the first terminal device and the third terminal device, wherein
the second condition comprises at least one of the following conditions: a distance between the location of the first terminal device and a location of the third terminal device is less than a second preset threshold, the identifier of the first terminal device is the same as the third identifier of the third terminal device, the group identifier of the first terminal device is the same as the group identifier of the third terminal device, the service identifier of the first terminal device is the same as the service identifier of the third terminal device, the address of the first device connected to the first terminal device is the same as the address of the third device connected to the third terminal device, the identifier of the first device is the same as the identifier of third device, and the first application layer identifier is the same as the third application layer identifier; and
updating, by the access network device, the first association relationship to the second association relationship.

9. The method according to any one of claims 1 to 8, wherein the method further comprises:
receiving, by the access network device, sixth information sent by the first terminal device, wherein the sixth information indicates to enable terminal device coordinated transmission, and the terminal device coordinated transmission means that at least two terminal devices that have an association relationship perform aggregation transmission or backup transmission with the access network device; and
determining, by the access network device based on the first association relationship, the second terminal device that has the association relationship with the first terminal device.

10. The method according to claim 9, wherein the sixth information comprises the first information or the identifier of the first association relationship.

11. A communication method, comprising:
determining, by a terminal device, first information, wherein the first information comprises at least one of the following information: location information of the terminal device, an identifier of the terminal device, a group identifier of the terminal device, a service identifier of the terminal device, an address of a first device connected to the terminal device, an identifier of the first device, and a first application layer identifier; and
sending, by the terminal device, the first information to an access network device.

12. The method according to claim 11, wherein the method further comprises:
receiving, by the terminal device, first indication information sent by the access network device, wherein the first indication information indicates that the terminal device is a primary terminal device.

13. The method according to claim 12, wherein the method further comprises:
determining, by the terminal device based on quality of service QoS of a service, that terminal device coordinated transmission needs to be enabled, and comprising second indication information in a radio resource control RRC connection setup request sent by the terminal device to the access network device, wherein the second indication information indicates to enable the terminal device coordinated transmission.

14. A communication method, comprising:
sending, by a first access network device, a handover request to a second access network device, wherein the handover request indicates an association relationship between terminal devices, and the handover request comprises at least one of the following information: identifiers of the terminal devices, an association indication for the terminal devices, and an association identifier for the terminal devices.

15. A communication method, comprising:
receiving, by a second access network device, a handover request sent by a first access network device, wherein the handover request indicates an association relationship between terminal devices, and the handover request comprises at least one of the following information: identifiers of the terminal devices, an association indication for the terminal devices, and an association identifier for the terminal devices.

16. The method according to claim 15, wherein the handover request further comprises bearer identifiers of the terminal devices.

17. A communication apparatus, wherein the communication apparatus comprises a module configured to perform the method according to any one of claims 1 to 16.

18. A communication apparatus, wherein the communication apparatus comprises at least one processor and a memory, the processor is coupled to the memory, the memory stores program instructions, and when the program instructions stored in the memory are executed by the processor, the communication apparatus is enabled to perform the method according to any one of claims 1 to 16.

19. A computer-readable storage medium, wherein the computer-readable storage medium is configured to store program instructions executed by a computer, and the program instructions comprise instructions used to perform the method according to any one of claims 1 to 16.

20. A computer program product, wherein the computer program product comprises computer program instructions, and when the computer program instructions are run on a computer, the computer is enabled to implement the method according to any one of claims 1 to 16.
